# EUROPEAN PATENT SPECIFICATION

(11) **EP 3 608 008 B1**
(45) Date of publication and mention of the grant of the patent: **27.07.2022**
(21) Application number: 19152194.7
(22) Date of filing: 16.01.2019
(51) Int. Cl.: B01D 35/153, C02F 1/00, F25D 23/00, C02F 1/28

(54) **FILTRATION SYSTEM WITH ROTATING CORE DRIVING THIMBLE OPENING AND CLOSING WATER PASSAGE**
FILTRATIONSANLAGE MIT DREHKERNE, DIE DEN THIMBLE-ÖFFNEN UND SCHLIESSEN DES WASSERABLASSS BEWEGT
SYSTÈME DE FILTRATION À NOYAU ROTATIF PERMET L'OUVERTURE ET LA FERMETURE DU PASSAGE D'EAU

(30) Priority: 07.08.2018 CN 201810892143
(43) Date of publication of application: 12.02.2020
(73) Proprietor: Tianjin Tianchuang Best Pure Environmental Science and Technology Co., Ltd., Tianjin (CN)
(72) Inventor: Wei, Enyu, TIANJIN, Tianjin (CN)
(74) Representative: Díaz de Bustamante y Terminel, Isidro

(56) References cited:
- CN-A- 107 983 005
- US-A1- 2006 254 971
- US-A1- 2016 136 547

## Description

### TECHNICAL FIELD

The invention relates to the field of refrigerator filtration, and in particular to a filtration system with a rotating core driving thimble opening and closing water passage.

### TECHNICAL BACKGROUND

At present, a refrigerator filter and a refrigerator connecting device are in multi-spiral guide locking, and both are made of plastic products, the filter element wears the locking position of the connecting device when the filter element is rotated, as the number of the filter's replacements increases, a gap between the filter element and the connecting device becomes larger, when the pressure of a water supply pipeline is too large, the axial position of the two is displaced, and the connecting device is prone to leakage, which affects the reliability of a filtration system.

Furthermore, at present, a water inlet and a water outlet of the refrigerator filter are in the same axial position, so as to prevent pre-filtration water and post-filtration water from being mixed by a sealing O-ring, if the cooperation between the sealing ring and a connector has a problem, inner leakage will occur, so that the pre-filtration water pollutes the post-filtration water, reducing the filtration efficiency of the filter.

US2016/136547 A1, CN107983005 A, and US2006/254971 A1 describe filter systems of the prior art.

### SUMMARY

In view of the above technical problems, the present invention provides a filtration system comprising: a casing, a filter element and a connector, wherein:
- the filter element comprises a filter element body and a carbon rod mounted inside the filter element body, the filter element body and the connector being connected and fixed in a cavity of the casing through which a refrigerator water intake pipe and a refrigerator water outtake pipe can be connected to the water inlet and the water outlet of the connector, the filtration system being characterized in that:
- the connector comprises a connector bracket which is fixed in the cavity of the casing, a connector body having one side provided with a water inlet cavity and a water outlet cavity, and a rotating connector core, which is connected to the connector body and located in an inner cavity of the connector body;

the connector bracket is provided thereon with a C-shaped groove, the connector body is mounted on the upper side of the connector bracket, a rotating shaft is mounted on the connector body, the rotating shaft is mounted in the C-shaped groove, the rotating shaft is located at the two sides of the connector body, the axis thereof is perpendicular to the axis of the connector body, the rotating shaft cooperates with the C-shaped groove of the connector bracket, the axis of the rotating shaft of the connector body is coaxial with the C-shaped groove, can be rotated along the axis, and can drive the connector and the filter element to oscillate integrally along an arc line;
the connector core is sealed in the connector body by a water intake sealing ring and a water outtake sealing ring, which are mounted in two grooves of the connector core, respectively;
the filter element comprises a water inlet and a corresponding groove on which is mounted a filter element water intake sealing ring, which is mating with an inner cavity of the connector core to seal the pre-filtration water, as well as a water outlet and a corresponding groove on which is mounted a filter element water outtake sealing ring, which is mating with an inner cavity of the connector core to seal the post-filtration water;
- the connector further comprises a water intake thimble, a water intake thimble sleeve , a water intake thimble spring , and a water intake thimble sealing ring , which are mounted in a water intake thimble cavity, which is arranged in the water inlet cavity of the connector body , as well as a water outtake thimble , a water outtake thimble sleeve , a water outtake thimble spring , and a water outtake thimble sealing ring , which are mounted in a water outtake thimble cavity, which is arranged in the water outlet cavity of the connector body , in such a way that the connector core , the water intake thimble and the water outtake thimble are tightly pressed by the water intake thimble spring and the water outtake thimble spring respectively;
- the connector core is provided with a water inlet boss (3-21) on which an arc-shaped groove is provided, and a water outlet boss (3-22) on which an arc- shaped groove is provided;
- when the filter element is inserted into the connector and rotated, this drives the rotation of the connector core within the connector body , in such a way that the water intake thimble and the water outtake thimble are pushed up by the rotation of the connector core , while being pressed by the water intake thimble spring and the water outtake thimble spring respectively, and they are lifted and raised from the position of the groove to the position of the boss so that the water passage is opened, and when the filter element is rotated so as to be disassembled, the water intake thimble and the water outtake thimble are lowered and fall from the position of the boss to the position of the groove, corresponding to a situation where, due to the action of the water intake thimble spring and of the water outtake thimble spring the water intake thimble sealing ring and the water outtake thimble sealing ring are attached to the water intake thimble sleeve and the water outtake thimble sleeve , realizing the sealing, so that the water passage is closed, preventing the leakage of the connector water due to the removal of the filter element.

In one embodiment, a water outlet is provided at the front side of the filter element body, a water inlet is provided at the circumference of the water outlet, the filter element water outtake sealing ring is mounted at the water outlet, the water element intake sealing ring is mounted in the water inlet; the water inlet is a set of hole-shaped holes, which are arranged in a ring shape on the second platform at the top of the filter element body, located below the water outlet, located on a water element intake sealing ring groove, and the water inlet is configured to the entering of the pre-filtration water into the filter element. The filter element further comprises a carbon rod cover, a carbon rod bottom, and a carbon rod cover sealing ring, wherein the carbon rod is mounted in the inner side of the filter element of a barrel shape, the carbon rod bottom is mounted at the rear side of the carbon rod, the carbon rod cover is mounted at the top of the carbon rod, the carbon rod cover sealing ring is fixed at the carbon rod cover, the carbon rod bottom is located inside the filter element. The water outlet is located on the boss at the top of the filter element body for the post-filtration water to flow out of the filter element and enter into the connector, the cavity formed by the filter element water outlet cooperates with the carbon rod of carbon rod cover and a sealer to form a sealing structure, the cavity internally formed by the filter element water inlet cooperates with the carbon rod cover sealing ring to seal the pre-filtration water and the post-filtration water to prevent the short circuit of the water passage.

In a further embodiment of the present invention, the connector furthere comprises a connector bottom cover and the connector bottom is at a lower portion of the connector body, the connector bottom cover is provided with a groove flange, the groove flange is attached to a connecting flange of the connector body, the connector bottom cover has two notches attached to a body flange positioning block, a connector bottom cover groove flange has two buckle grooves thereon and snap-fitted to prevent the connector and the filter element from falling due to gravity, the connector water intake sealing ring and a connector water outtake sealing ring are mounted in the two grooves of the connector core, respectively, the water intake sealing ring being located in the lower groove, and the water outtake sealing ring being located in the upper groove.

In a further embodiment of the present invention, the outer portion of the upper cover of the casing has a trapezoidal three-dimensional shape, and the bottom thereof has a rectangular plate-like edge, the upper portion of the trapezoidal three-dimensional shape has laterally and longitudinally distributed reinforcing ribs, the upper plane thereof faces the opposite direction of the ground surface, the outer cover of the casing is provided with two bosses, one boss is in the central region, and the other one is at one side of the central region, and the centers of the two bosses are on one axis, and the two axes are parallel to the edge of the bottom rectangular plate-shaped edge, the boss at the central region comprises a circular boss and a cross-shaped reinforcing rib, the boss on one side of the central portion comprises the circular boss and an 1-shaped reinforcing rib, one side of the trapezoidal three-dimensional shape is provided with a hollow boss, the hollow boss comprises two circular shapes, the hollow boss and the trapezoidal three-dimensional shape form the cavity through which the refrigerator water intake pipe and the refrigerator water outtake pipe are connected to the water inlet and the water outlet of the connector of the filtration system.

In a further embodiment of the present invention, the bottom of the upper cover of the casing has a trapezoidal three-dimensional concave structure, the concave structure is the cavity of the upper cover of the casing, the cavity is configured to accommodate the upper portions of the filter element and the connector, two blind holes are provided in the cavity, the central region and one side thereof, the two blind holes are connected to the connector bracket via a screw, the backs of the two blind holes are a cross-shaped protrusion and a 1-shaped protrusion, respectively; the side of the cavity of the upper cover of the casing is provided with two trapezoidal three-dimensional bosses, and the two bosses are located on the longer concave boundary; the two bosses are configured to the snap-fitting with a C-shaped protrusion of the lower cover of the casing for tightly clamping the lower cover of the casing.

In a further embodiment of the present invention, the lower cover of the casing has a trapezoidal three-dimensional concave thin plate structure, and the structure comprises four faces, which are a long face A, a long face B, a ground surface and a short face, one end of the trapezoidal three-dimensional concave thin plate structure is opened, one end of the long face A and the long face B which is opened is provided with two bosses, and the two bosses have the two blind holes, respectively; the lower cover of the casing is the long face A, the portion of the long face B close to the short face has two C-shaped buckles for connecting and tightly clamping two trapezoidal cubes of the upper cover of the casing to prevent the lower cover of the casing from falling off due to the own weight thereof; the lower cover of the casing has a shaft hole for connecting the shaft of an inner casing of the refrigerator, the lower cover of the casing can be rotated clockwise and counterclockwise along the axis so that the lower cover of the casing is opened and closed; the filter element water intake sealing ring groove is located under the water inlet for installing the filter element water intake sealing ring and cooperating with the inner cavity of the connector core to seal the pre-filtration water; the filter element water outtake sealing groove is located on the circumference of a filter element body boss for installing the filter element water outtake sealing ring and cooperating with the top of the inner cavity of the connector core to seal the post-filtration water.

In a further embodiment of the present invention, an end cover welding stop port is provided at an opening of the filter element end cover, and an inner rib position is provided at the inner side thereof, a wrench is mounted at an anti-slip thread and the rear side of the filter element end cover, the filter element end cover is provided thereon with the anti-slip thread; the end cover welding stop port is located at an opening end of the end cover, cooperates with a body welding stop port and is dissolved with the body welding stop, and the axes of the end cover welding stop port and the body welding stop port are the same the end cover inner rib positions are evenly distributed inside the filter element end cover for supporting the carbon rod bottom rib position, and the carbon rod bottom rib position and an end cover rib position are embedded with each other.

In a further embodiment of the present invention, the connecting flange is located on the circumference of the boss at the top of the filter element body, the lower end face of the connecting flange cooperates with the end face of the connector bottom cover of the connector for preventing the filtration system from coming out when the filtration system is under pressure.

The present invention has the beneficial effects that the present invention improves the internal leakage phenomenon caused by the inner core wearing of the filtration system, and the inner core drives the thimble to prevent the water from flowing out when the filter element is disassembled. the cavity formed by the filter element water outlet of the present invention cooperates with the carbon rod of the carbon rod cover and the sealer to form a sealing structure to avoid the occurrence of internal leakage, the cavity internally formed by the filter element water inlet cooperates with the carbon rod cover sealing ring for sealing the pre-filtration water and the post-filtration water to prevent the short circuit of the water passage.

The connecting flange of the present invention is located on the circumference of the boss at the top of the filter element body, the lower end face of the connecting flange cooperates with the end face of the connector bottom cover for preventing the filtering system from coming out when the filtering system is under pressure. Two buckle grooves on the groove flange of the connector bottom cover cooperates with a buckle of the connector bracket to prevent the connector and the filter element from falling due to gravity.

The present invention drives the connector core through the rotation of the filter element and raises the position of the thimble of the water inlet and the water outlet of the connector to open the water outlet and the water inlet so that the connector and the filter element water passage are opened and closed. According to the present invention, the connector is fixed to the filter element by tightly clamping the buckle groove on the connector and the buckle on the connector bracket. When installed, the filter element is inserted into the connector to turn clockwise until the filter element is locked and the water passage is opened. The filter element is lifted, and the connector is lifted by rotating the rotating shaft along the arc line so that the buckle and the buckle groove are tightly clamped, the lower cover of the casing is lifted along the arc line to be clamped with the upper cover of the casing. When disassembled, the lower cover of the casing is pressed down along the arc line to separate from the upper cover of the casing, the filter element is pressed down, and the connector is pressed down by rotating the rotating shaft along the arc line, the filter element is rotated counterclockwise, and the filter element is removed from the connector. The present invention improves the internal leakage caused by the inner core wear of the filtration system, and the inner core drives the thimble to prevent the water from flowing out when the filter element is disassembled.

The connector core of the present invention has the groove and the boss thereon, the connector core, the water intake thimble and the water outtake thimble are tightly pressed by the spring, when the connector is rotated, the water intake thimble and the water outtake thimble are raised from the position of the groove to the position of the boss, and the water passage is opened, when disassembled, the connector is lowered from the position of the boss to the position of the groove, and the water passage is closed, preventing the leakage of the connector water due to the removal of the filter element. When the filter element is installed and disassembled, the water intake thimble and the water outtake thimble are lifted and lowered so that the water intake thimble sealing ring and the water outtake thimble sealing ring are attached to and separated from the water intake thimble sleeve and the water outtake thimble sleeve to perform the sealing. The worn areas caused by the opening, closing and sealing of the entire water passage are the heads of the water intake thimble and the water outtake thimble, an inner core groove and the boss. Due to the action of the spring, even if the water intake thimble and the water outtake thimble are worn seriously, the water intake thimble sealing ring and the water outtake thimble sealing ring are attached to the water intake thimble sleeve and the water outtake thimble sleeve, realizing the sealing and not causing a leakage phenomenon.

### BRIEF DESCRIPTION OF THE DRAWINGS

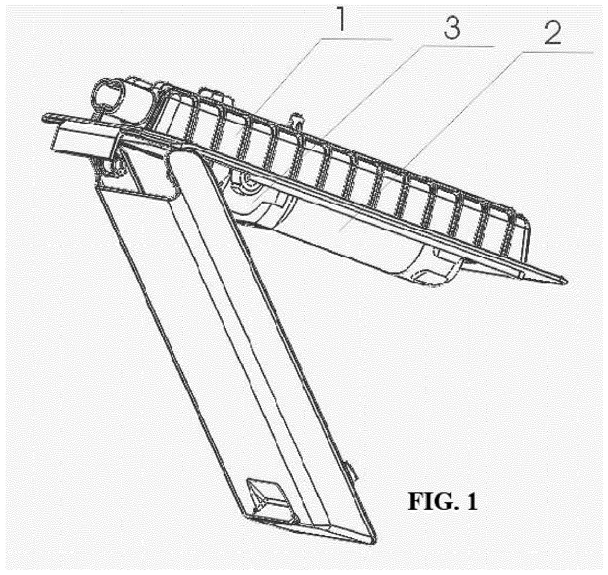

FIG. 1 is a structural view of the present invention.

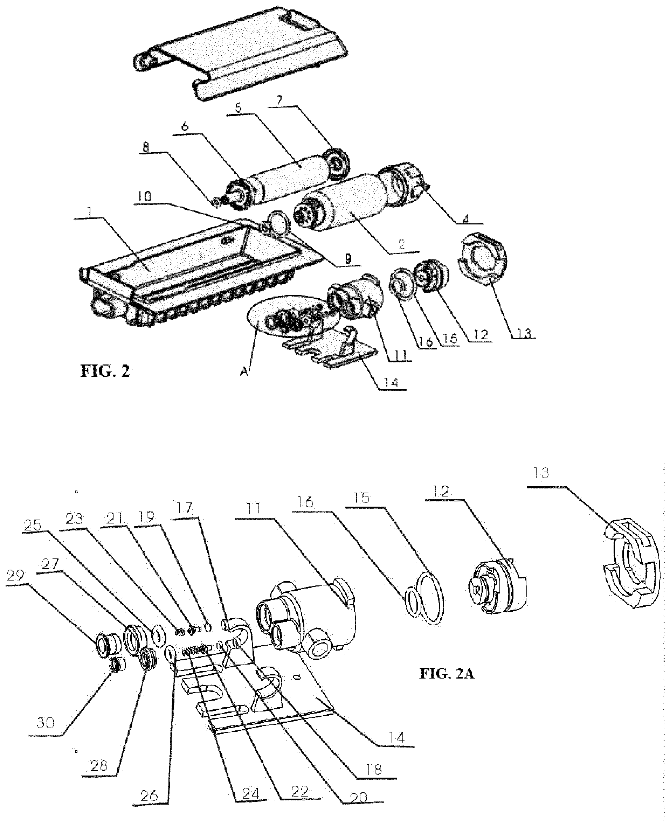

FIG. 2 is an exploded view of the present invention.
2A is an exploded view A of the present invention.

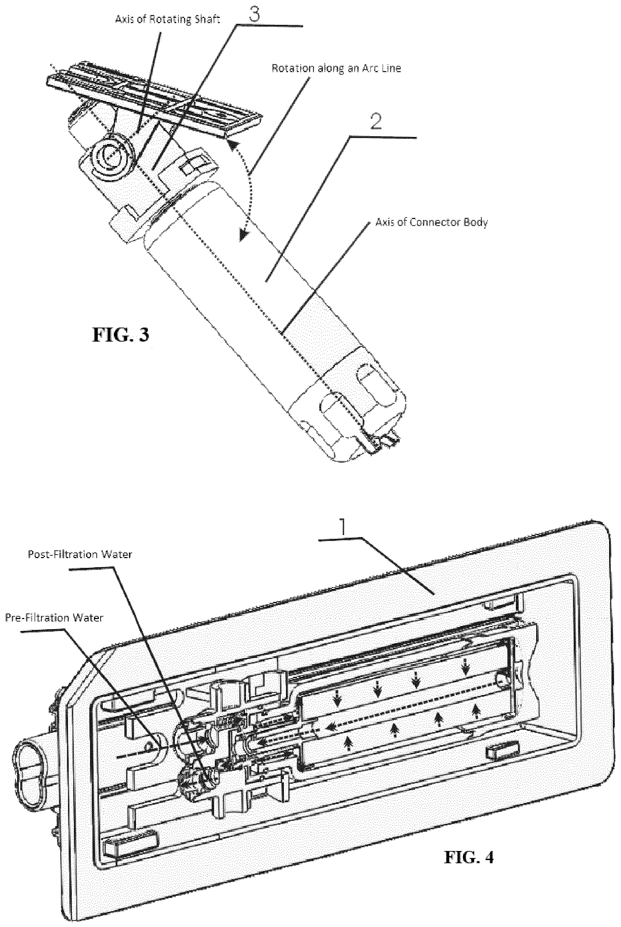

FIG. 3 is a structural view of a rotating filter element of the present invention.
FIG. 4 is a sectional view of the present invention.

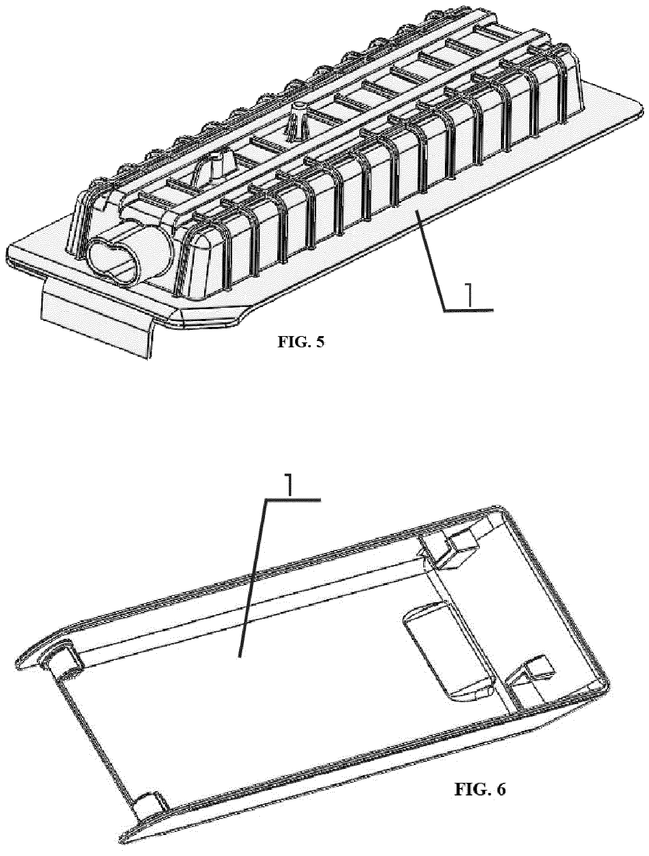

FIG. 5 is a structural view of an upper cover of a casing of the present invention.
FIG. 6 is a structural view of a lower cover of a casing of the present invention.

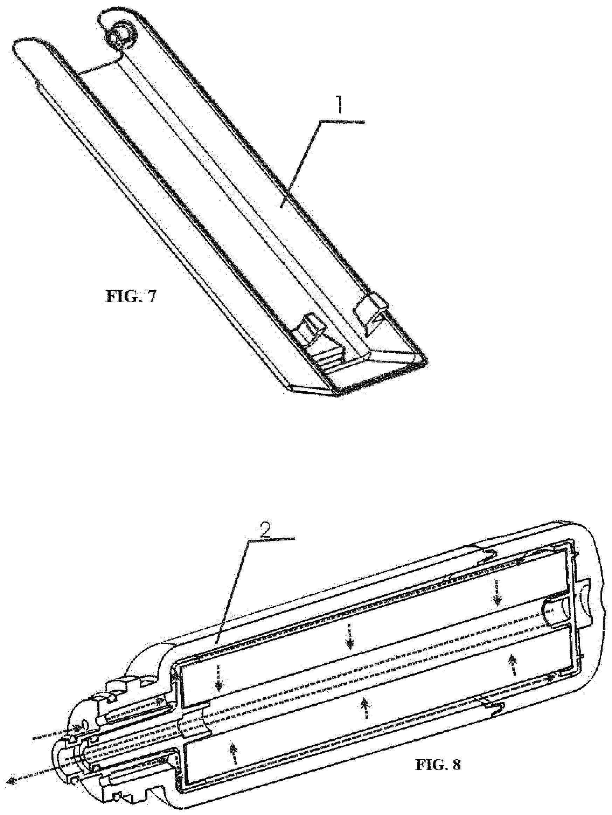

FIG. 7 is a structural view of a C-shaped buckle of the present invention.
FIG. 8 is a sectional view of a filter element of the present invention.

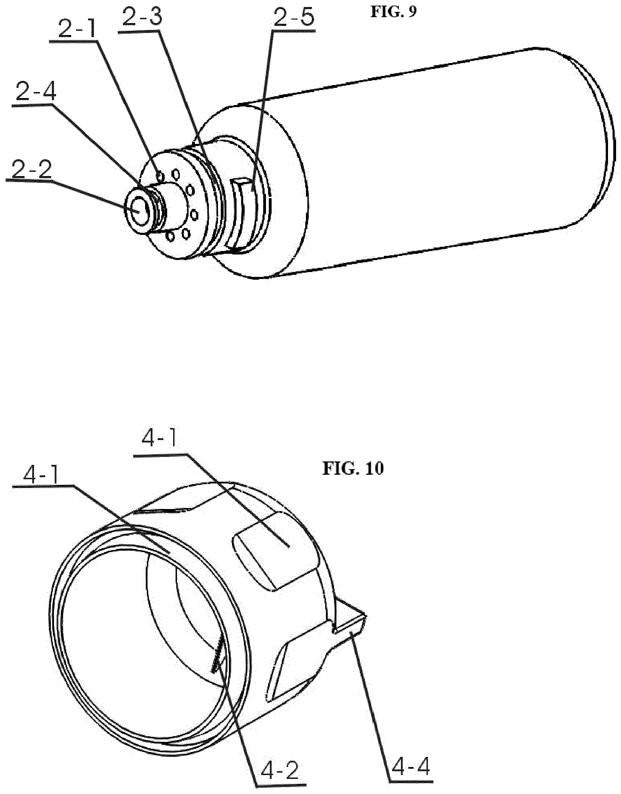

FIG. 9 is a structural view of a filter element of the present invention.
FIG. 10 is a structural view of an end cover of a filter element of the present invention.

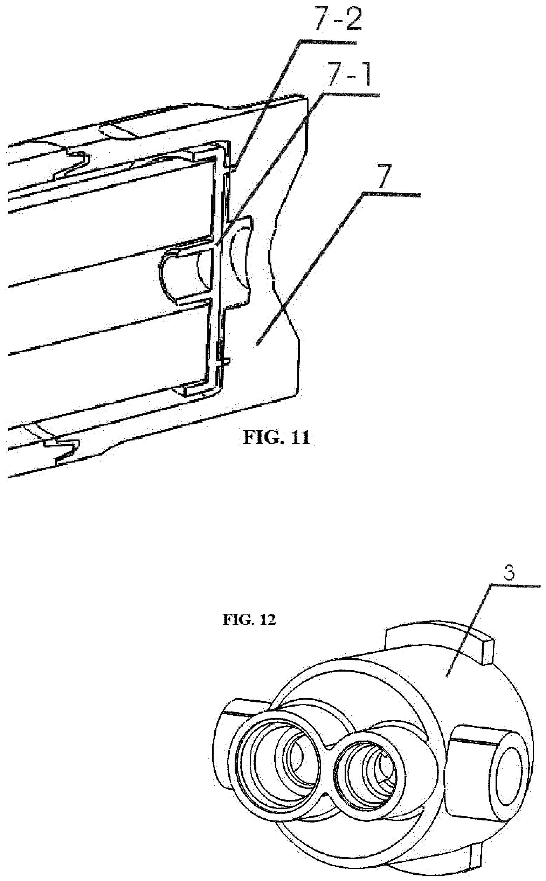

FIG. 11 is a structural view of an annular rib of a carbon rod bottom according to the present invention.
FIG. 12 is a structural view of a connector body of the present invention.

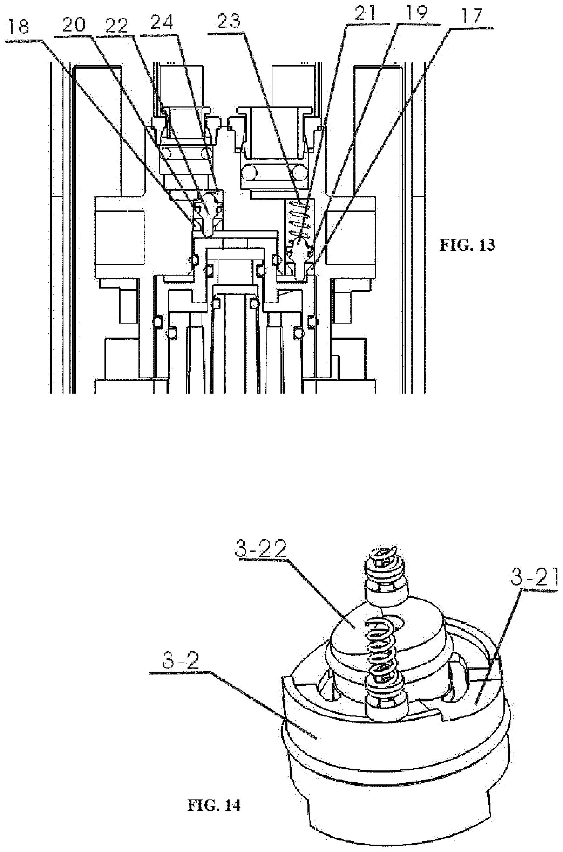

FIG. 13 is a sectional view of a top end of a filter element body of the present invention.
FIG. 14 is a structural view of a water outlet of the present invention.

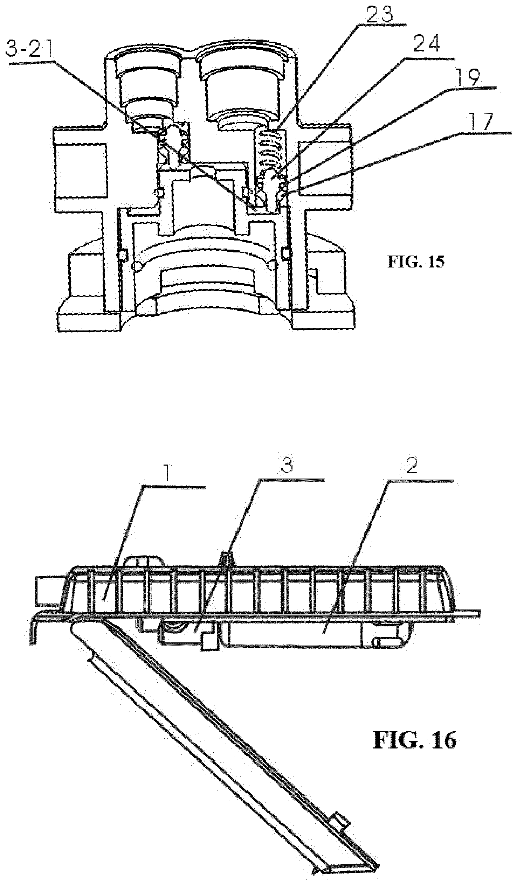

FIG. 15 is a sectional view of a water inlet of the present invention.
FIG. 16 is a structural view of the present invention.

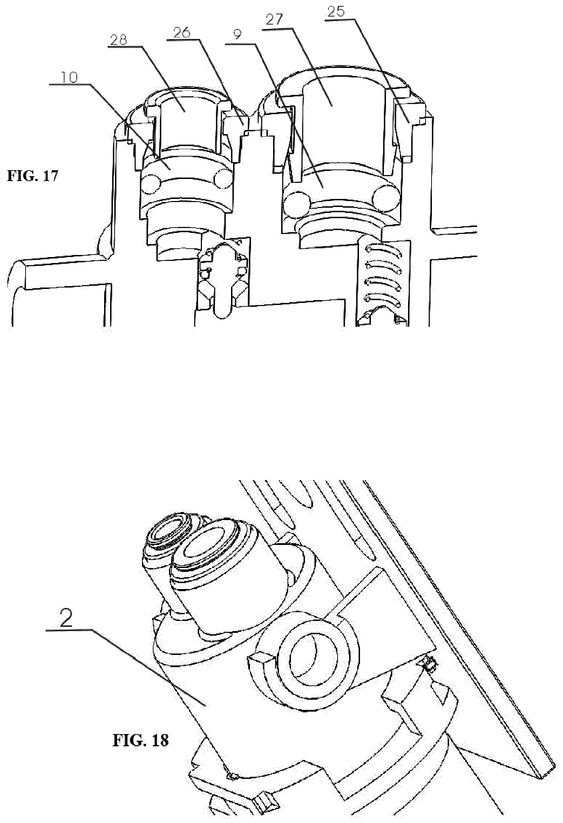

FIG. 17 is a structural view of an upper portion of a filter element of the present invention.
FIG. 18 is a side structural view of a filter element of the present invention.

### Reference signs:

1: Casing
2: Filter Element
3: Connector
4: Filter Element End Cover
5: Carbon Rod
6: Carbon Rod Cover
7: Carbon Rod Bottom
8: Carbon Rod Cover Sealing Ring
9: Filter Element Water Intake Sealing Ring
10: Filter Element Water Outtake Sealing Ring
11: Connector Body
12: Connector Inner Core
13: Connector Bottom Cover
14: Connector Bracket
15: Connector Water Intake Sealing Ring
16: Connector Water Outtake Sealing Ring
17: Water Intake Thimble Sleeve
18: Water Outtake Thimble Sleeve
19: Water Intake Thimble Sealing Ring
20: Water Outtake Thimble Sealing Ring
21: Water Intake Thimble
22: Water Outtake Thimble
23: Water Intake Spring
24: Water Outtake Spring
25: Water Intake Cover Board
26: Water Outtake Cover Board
27: Water Intake Clamp
28: Water Outtake Clamp
3-21: Water Inlet Boss
3-22: Water Outlet Boss
2-1: Water Inlet
2-2: Water Outlet
2-3: Filter Element Water Intake Sealing Ring Groove
2-4: Filter Element Water Outtake Sealing Ring Groove
Connecting Flange 2-5
4-1: End Cover Welding Stop Port
4-2: Inner Rib Position
4-3: Anti-Slip Thread
4-4: Wrench
7-1: Inner Cavity
7-2: Annular Rib Position

### DETAILED DESCRIPTION

The invention is further illustrated in accordance with the drawings.

The invention provides a filtration system with a rotating core driving thimble opening and closing water passage, comprising a casing 1, a filter element 2 and a connector 3, characterized in that the filter element 2 and the connector 3 are connected and fixed in an inner cavity of the casing 1, the casing 1 comprises an upper cover of the casing 1 and a lower cover of the casing 1, which are connected via a connecting member; the filter element 2 comprises a filter element body, a filter element end cover 4, a carbon rod 5, a carbon rod cover 6, a carbon rod bottom 7, a carbon rod cover sealing ring 8, a filter element water intake sealing ring 9 and a filter element water outtake sealing ring 10, the inner side of the lower cover of the casing 1 is provided with a cavity, the filter body and the connector 3 are mounted in the cavity, the filter body and the connector 3 are connected, the lower cover of the casing 1 is provided with a connecting member, the lower cover of the casing 1 is connected to the upper side of the casing 1 via the connecting member; the filter element body has a barrel-shaped structure, the carbon rod 5 is mounted at the inner side of a barrel body, a carbon rod bottom 7 is mounted at the rear side of the carbon rod 5, the carbon rod cover 6 is mounted at the top end of the carbon rod 5, a carbon rod cover sealing ring 8 is fixed on the carbon rod cover 6, the carbon rod bottom 7 is located inside the filter element, one end of the carbon rod bottom 7 has an inner cavity 7-1, and the other end thereof has an annular rib position 7-2, the inner cavity 7-1 is connected to the carbon rod 5, the annular rib position 7-2 and an end cover inner rib position 4-2 are embedded into each other, the filter element end cover 4 is mounted at the rear side of the filter element body, one end of the carbon rod cover 6 has a boss, and the other end thereof has a cavity, a through hole penetrating two ends and an annular rib position 7-2 uniformly distributed at four positions are provided at the center thereof, the boss is provided thereon with a groove, the groove is configured to install the carbon rod cover sealing ring 8, a cavity forming filter element formed with a filter element water outlet 2-2 internally forms a sealing structure of a sealing carbon rod 5, the end face of the cavity is connected to the carbon rod 5, the through hole of which the center penetrates the two ends thereof is configured to the passage of post-filtration water, the annular ribs 7-2 uniformly distributed at four positions is in contact with the inner cavity of the filter element body for defining the overall position of the carbon rod cover 6, the cavity forming filter element formed by the carbon rod cover sealing ring 8 and the filter element water outlet 2-2 of the groove on the boss of the carbon rod cover 6 internally forms the sealing structure of the sealing carbon rod 5; the front side of the filter element body is provided with the water outlet 2-2, a water inlet 2-1 is provided around the water outlet 2-2, the filter element water outtake sealing ring 10 is mounted at the water outlet 2-2, the filter element water intake sealing ring 9 is mounted at the water inlet 2-1; the water inlet 2-1 is a set of hole-shaped holes, which are arranged in a ring shape on two platforms at the top of the filter body, located below the water outlet 2-2, and located on the groove 2-3 of the filter element water intake sealing ring 9, and the water inlet 2-1 is configured to the entering of the pre-filtration water into the filter element.

The water outlet 2-2 is located on the boss at the top of the filter element body so that the post-filtration water flows out of the filter element and enters into the connector 3, the cavity formed by the filter element water outlet 2-2 cooperates with the carbon rod 5 of the carbon rod cover 6 and a sealer to form the sealing structure, the cavity internally formed by the filter element water inlet 2-1 cooperates with the carbon rod cover sealing ring 8 for sealing the pre-filtration water and the post-filtration water to prevent the short circuit of a water passage; the connector 3 comprises a connector body 11, a connector core 12, a connector bottom cover 13, a connector bracket 14, a connector water intake sealing ring 15, a connector water outtake sealing ring 16, a water intake thimble sleeve 17, a water outtake thimble sleeve, a water intake thimble sealing ring 19, a water outtake thimble sealing ring 20, a water intake thimble 21, a water outtake thimble 22, a water intake spring 23, a water outtake spring 24, a water intake sealing ring, a water outtake sealing ring, a water intake cover board 25, a water outtake cover board 26, a water intake clamp 27 and a water outtake clamp 38, the connector bracket 14 is provided thereon with a C-shaped groove, the connector body 14 is mounted at the upper side of the connector bracket 14, a rotating shaft is mounted on the connector body 11 and in the C-shaped groove, the rotating shaft is located at the two sides of the connector body 11, the axis of the rotating shaft is perpendicular to the axis of the connector body 11, the rotating shaft cooperates with the C-shaped groove of the connector bracket 14, the axis of the rotating shaft of the connector body 11 is coaxial with the C-shaped groove, can be rotated along the axis, and can drive the connector 3 and the filter element to oscillate integrally along an arc line; the connector body 11 is provided with a cavity of the water inlet 2-1, a cavity of the water outlet 2-2, a cavity of the water intake thimble 21, a cavity of a water outtake thimble 22, the rotating shaft, an core cavity, a connecting flange 2-5 and a flange positioning block; the connector body 11 is connected to the connector core 12,the connector core 12 is located in the inner cavity of the connector body 11, and is sealed by the water intake sealing ring and the water outtake sealing ring, the connector core 12 is provided thereon with the groove and the boss, and the connector core 12, the water intake thimble and the water outtake thimble 22 are pressed by the spring, the connector core 12 has a water inlet boss 3-21 on which one arc groove is provide, the water intake thimble 21 is pushed up via the rotation of the core, the connector core 12 has a water outlet boss 3-22 on which one arc groove is provided, the water outtake thimble 22 is pushed up by the rotation of the core, one side of the connector body 11 is provided with the water inlet 2-1 and the water outlet 2-2, the water inlet 2-1 is connected to the water intake cover board 25, the water intake sealing ring is arranged between the water inlet 2-1 and the water intake cover board 25, the water intake cover board 25 is connected to the water intake clamp 27, the water inlet 2-1 is provided therein with the cavity of the water intake thimble 21, a water intake thimble sleeve 17, the water intake thimble sealing ring 19, the water intake thimble 21 and the water intake spring 23 are mounted in the cavity of the water intake thimble 21, the water intake thimble 21 is rotated by the connector core 12, the thimble is lifted and fell through the water inlet boss 3-21 and the groove and by the action of the water intake spring 23, so that the water passage is opened and closed; the water outlet 2-2 is connected to the water outtake cover board 26, the water outtake sealing ring is arranged between the water outlet 2-2 and the water outtake cover board 26, the water outtake cover 26 is connected to the water outtake clamp 38, the water outlet 2-2 is provided therein with the cavity of the water outtake thimble 22, the water outtake thimble sleeve, the water outtake thimble sealing ring 20, the water outtake thimble 22 and the water outtake spring 24 are mounted in the cavity of the water outtake thimble, the water outtake thimble 22 is rotated through the connector core 12, the thimble is lifted and fell through the water outlet boss 3-22 and the groove and by the action of the water outtake spring 24, so that the water passage is opened and closed.

The connector bottom cover 13 is at the lower part of the connector body 11, and is provided with one groove flange, the groove flange is attached to a connecting flange 2-5 of the connector body 11, and the connector bottom cover 13 has two notches which are attached to a body flange positioning block, two buckle grooves on a groove flange of the connector bottom cover 13 are snap-fitted with the connector bracket 14 to prevent the connector 3 and the filter element 2 from falling due to gravity, the connector water outtake sealing rings 16 is mounted in the two grooves of the connector core 12, respectively, the water intake sealing ring is located in a lower groove, and the water outtake sealing ring is located in an upper groove.

The outer portion of an upper cover of the casing 1 has a trapezoidal three-dimensional shape, and the bottom thereof has a rectangular plate-like edge, the upper portion of the trapezoidal three-dimensional shape has laterally and longitudinally distributed reinforcing ribs, the upper plane faces the opposite direction of the ground surface, the upper cover of the casing 1 has two bosses, one boss is provided at the central region, and the other one is provided at one side of the central region, the centers of the two bosses are on one axis, and the two axes are parallel to the edge of a bottom rectangular plate, the boss at the central region comprises a circular boss and a cross-shaped reinforcing rib, the boss on one side of the central region comprises a circular boss and an 1-shaped reinforced rib, one side of the trapezoidal shape has a hollow boss, the hollow boss comprises two circles, the hollow boss and the trapezoidal shape form the cavity through which a refrigerator water intake pipe and a refrigerator outtake pipe are connected to the water inlet and the water outlet 2-2 of the connector 3 of the filtration system.

The bottom of the upper cover of the casing 1 has a concave structure of a trapezoidal cube, the concave structure is the cavity of the upper cover of the casing 1, the cavity is configured to accommodate the filter element 2 and the upper half of the connector 3, two blind holes are provided in the cavity and the central region and one side, the two blind holes are connected to the connector bracket 14 by a screw. the backs of the two blind holes are a cross-shaped protrusion and a 1-shaped protrusion, respectively; the side of the cavity of the upper cover of the casing 1 has two trapezoidal cube bosses, the two bosses are located on the longer inner concave boundary; and the two bosses are configured to the snap-fitting with the C-shaped protrusion of the lower cover of the casing 1 for tightly clamping the lower cover of the casing 1.

The lower cover of the casing 1 has a trapezoidal three-dimensional concave thin plate structure, the structure comprises four faces, which are a long face A, a long face B, a ground surface, a short face, the trapezoidal three-dimensional concave thin plate structure has one opening at one end thereof, the ends of the long face A and the long face B where the openings are provided are provided with two bosses, the two bosses have two blind holes, respectively; the lower cover of the casing 1 has the long face A, the portion of the long face B close to the short face has two C-shaped buckles for connecting and tightly clamping the two trapezoidal cubes of two upper covers of the casing 1 to prevent the lower cover of the casing 1 from falling off due to the own weight thereof; the lower cover of the casing 1 has a shaft hole for connecting an inner casing shaft of the refrigerator, and the lower cover of the casing 1 can be rotated clockwise and counterclockwise along the axis, so that the lower cover of the casing 1 is opened and closed.

The groove 2-3 of the filter element water intake sealing ring is located below the water inlet 2-1 for mounting the filter water intake sealing ring 9 and mating with the inner cavity of the connector core 12 to seal the pre-filtration water. The groove 2-4 of the filter element water outtake sealing ring 10 is located on the circumference of the filter body boss for mounting the filter element water outtake sealing ring 10 and mating with the top of the inner cavity of the connector core 12 to seal the post-filtration water. The opening of the filter element end cover 4 is provided with an end cover welding stop port 4-1, the inner side thereof is provided with an inner rib position 4-2, a wrench 4-4 is provided at an anti-slip thread 4-3 and the back side of the filter element end cover 4, the filter element end cover 4 is provided thereon with the anti-slip thread 4-3; the end cover welding stop port 4-1 is located at the opening end of the end cover, cooperates with the body welding stop port and is dissolved, and the axes of the two welding stop ports are the same; the inner rib positions 4-2 of the end cover are evenly distributed inside the filter element end cover 4 for supporting the rib position at the carbon rod bottom 7, the rib positions of the carbon rod bottom 7 and the end cover are embedded with each other. The connecting flange 2-5 is located on the circumference of the boss of the top of the filter element body, and the lower end face of the connecting flange 2-5 is matched with the end face of the connector bottom cover 13 for preventing the filtration system from coming out when the filtration system is under pressure.

When used, the present invention rotationally drives a connector core 12 by the rotation of a filter element 2 to open a water inlet and a water outlet 2-2 by raising the position of a thimble of the water inlet and the water outlet 2-2 of a connector, thereby opening and closing the connector 3 and a filter element water passage. And the connector 3 is fixed to a filter element by tightly clamping a buckle groove on the connector 3 with a buckle on a connector bracket 14.

When mounted, the filter element 2 is inserted into the connector 3 to rotate clockwise until the filter element 2 is locked and a water passage is opened. The filter element 2 is lifted up, and the connector is lifted by rotating a rotating shaft upward along an arc line so that the buckle and the buckle groove are tightly clamped, and a lower cover of a casing 1 is lifted upward along the arc line to be tightly clamped with an upper cover of the casing 1.

When disassembled, the lower cover of the casing 1 is pressed down along the arc line and separated from the upper cover of the casing 1, the filter element 2 is pressed down, the connector is pressed down by rotating the rotating shaft along the arc line, the filter element 2 is rotated counterclockwise, and the filter element 2 is removed from the connector 3.

When disassembled, the connector 3 is lowered from the position of a boss to the position of a groove, the water passage is closed, preventing the leakage of the water of the connector 3 due to the removal of the filter element. When the filter element 2 is mounted and disassembled, a water intake thimble and a water outtake thimble 22 are lifted and lowered so that a water intake thimble sealing ring 19 and a water outtake thimble sealing ring 20 are attached and separated from a water intake thimble sleeve 17 and a water outtake thimble sleeve to perform the sealing. The wear area caused by the opening, closing and sealing of the entire water passage is the heads of a water intake thimble 21 and a water outtake thimble 22, the core groove and the boss. Due to the action of a spring, even if the water intake thimble and the water outtake thimble 22 are severely worn, the water intake thimble sealing ring 19 and the water outtake thimble sealing ring 20 are fitted to the water intake thimble sleeve 17 and the water outtake thimble sleeve, realizing the sealing and not causing water leakage.

When in use, a connector core 12 of the present invention has a groove and a boss thereon, and the connector core 12, a water intake thimble and a water outtake thimble 22 are tightly pressed by a spring, a water intake thimble sleeve 17, a water intake thimble sealing ring 19, a water intake thimble. 21 and a water intake spring 23 are located in a cavity of the water intake thimble 21. The water intake thimble 21 is rotated by the connector core 12, a thimble is lifted and fell through a water inlet boss 3-21 and the groove and by the action of the water intake spring 23, the water outtake thimble sleeve, a water outtake thimble sealing ring 20, and a water outtake thimble 22 and a water outtake spring 24 are located in a cavity of the water outtake thimble 22, and the water outtake thimble 22 is rotated by the connector core 12, the thimble is lifted and fell through a water outtake boss 3-22 and the groove and by the action of the water outtake spring 24, so that a water passage is opened and closed.

The connector core 12 of the present invention has the groove and the boss thereon, and the connector core 12, the water intake thimble and the water outtake thimble 22 are tightly pressed by the spring, when the connector 3 is rotated, the thimbles of a water inlet and a water outlet 2-2 are raised from the position of the groove to the position of the boss so that the water passage is opened for filtration.

a water passage is opened and closed.

The connector core 12 of the present invention has the groove and the boss thereon, and the connector core 12, the water intake thimble and the water outtake thimble 22 are tightly pressed by the spring, when the connector 3 is rotated, the thimbles of a water inlet and a water outlet 2-2 are raised from the position of the groove to the position of the boss so that the water passage is opened for filtration.

## Claims

1. A filtration system comprising a casing (1), a filter element (2) and a connector (3), wherein:
- the filter element (2) comprises a filter element body and a carbon rod (5) mounted inside the filter element body, the filter element body and the connector (3) being connected and fixed in a cavity of the casing (1) through which a refrigerator water intake pipe and a refrigerator water outtake pipe can be connected to the water inlet and the water outlet of the connector (3), the filtration system being **characterized in that**:
- the connector (3) comprises a connector bracket (14) which is fixed in the cavity of the casing (1), a connector body (11) having one side provided with a water inlet cavity and a water outlet cavity, and a rotating connector core (12),
which is connected to the connector body (11) and located in an inner cavity of the connector body (11); the connector bracket (14) is provided thereon with a C-shaped groove, the
connector body (11) is mounted on the upper side of the connector bracket (14), a rotating shaft is mounted on the connector body (11), the rotating shaft is mounted in the C-shaped groove, the rotating shaft is located at the two sides of the connector body (11), the axis thereof is perpendicular to the axis of the connector body (11),
the rotating shaft cooperates with the C-shaped groove of the connector bracket (14), the axis of the rotating shaft of the connector body (11) is coaxial with the C-shaped groove, can be rotated along the axis, and can drive the connector (3) and the filter element to oscillate integrally along an arc line; the connector core (12) is sealed in the connector body (11) by a water intake
sealing ring (15) and a water outtake sealing ring (16), which are mounted in two grooves of the connector core (12) respectively; the filter element (2) comprises a water inlet (2-1) and a corresponding groove (2-3) on which is mounted a filter element water intake sealing ring (9), which is mating with an inner cavity of the connector core (12) to seal the pre-filtration water, as well as a water outlet (2-2) and a corresponding groove (2-4) on which is mounted a filter element water outtake sealing ring (10), which is mating with an inner cavity of the connector core (12) to seal the post-filtration water;
- the connector (3) further comprises a water intake thimble (21), a water intake thimble sleeve (17), a water intake thimble spring (23), and a water intake thimble sealing ring (19), which are mounted in a water intake thimble cavity, which is arranged in the water inlet cavity of the connector body (11), as well as a water outtake thimble (22), a water outtake thimble sleeve (18), a water outtake thimble spring (24), and a water outtake thimble sealing ring (20), which are mounted in a water outtake thimble cavity, which is arranged in the water outlet cavity of the connector body (11), in such a way that the connector core (12), the water intake thimble (21) and the water outtake thimble (22) are tightly pressed by the water intake thimble spring (23) and the water outtake thimble spring (24) respectively;
- the connector core (12) is provided with a water inlet boss (3-21) on which an arc-shaped groove is provided, and a water outlet boss (3-22) on which an arc-shaped groove is provided;
- when the filter element (2) is inserted into the connector (3) and rotated, this drives the rotation of the connector core (12) within the connector body (11), in such a way that the water intake thimble (21) and the water outtake thimble (22) are pushed up by the rotation of the connector core (12), while being pressed by the water intake thimble spring (23) and the water outtake thimble spring (24) respectively, and they are lifted and raised from the position of the groove to the position of the boss so that the water passage is opened, and when the filter element (2) is rotated so as to be disassembled, the water intake thimble (21) and the water outtake thimble (22) are lowered and fall from the position of the boss to the position of the groove, corresponding to a situation where, due to the action of the water intake thimble spring (23) and of the water outtake thimble spring (24) the water intake thimble sealing ring (19) and the water outtake thimble sealing ring (20) are attached to the water intake thimble sleeve (17) and the water outtake thimble sleeve (18), realizing the sealing, so that the water passage is closed, preventing the leakage of the connector (3) water due to the removal of the filter element (2).

2. The filtration system according to claim 1, **characterized in that** the front side of the filter element body (2) is provided with the water outlet (2-2), the water inlet (2-1) is provided at the circumference of the water outlet (2-2), the filter element water outtake sealing ring (10) is mounted at the water outlet, the filter element intake sealing ring (9) is mounted at the water inlet; the water inlet is a set of hole-shaped holes, which are arranged in a ring shape on the second platform at the top of the filter element body, located below the water outlet, and located on a filter element water intake sealing ring groove (2-3), the water inlet is configured to the entering of the pre-filtration water into the filter element; the filter element (2) further comprises a carbon rod cover (6), a carbon rod bottom (7), and a carbon rod cover sealing ring (8), wherein the carbon rod (5) is mounted in the inner side of the filter element (2) of a barrel shape, the carbon rod bottom (7) is mounted at the rear side of the carbon rod (5), the carbon rod cover (6) is mounted at the top of the carbon rod (5), the carbon rod cover sealing ring (8) is fixed at the carbon rod cover (6), the carbon rod bottom (7) is located inside the filter element (2); the water outlet (2-1) is located on the boss at the top of the filter element body so that the post-filtration water flows out of the filter element into the connector (3), and the cavity formed by the filter element water outlet cooperates with the carbon rod cover (6) and a sealer to form a sealing structure, the cavity internally formed by the filter element water inlet cooperates with the carbon rod cover sealing ring (8) to seal the pre-filtration water and the post-filtration water to prevent the short circuit of the water passage.

3. The filtration system according to claim 1, **characterized in that** the connector further comprises a connector bottom cover (13) and the connector bottom (13) is at a lower portion of the connector body (11), the connector bottom cover (13) is provided with a groove flange, the groove flange is attached to a connecting flange of the connector body (11), the connector bottom cover (13) has two notches attached to a body flange positioning block, a connector bottom cover groove flange has two buckle grooves thereon and snap-fitted to prevent the connector (3) and the filter (2) from falling due to gravity, the connector water intake sealing ring (15) and the connector water outtake sealing ring(16) are mounted in the two grooves of the connector core (12), respectively, the connector water intake sealing ring (15) being located in the lower groove, and the water outtake sealing ring being located in the upper groove.

4. The filtration system according to claim 1, **characterized in that** the outer portion of the upper cover of the casing has a trapezoidal three-dimensional shape, and the bottom thereof has a rectangular plate-like edge, the upper portion of the trapezoidal three-dimensional shape has laterally and longitudinally distributed reinforcing ribs, the upper plane thereof faces the opposite direction of the ground surface, the outer cover of the casing is provided with two bosses, one boss is in the central region, and the other one is at one side of the central region, and the centers of the two bosses are on one axis, and the two axes are parallel to the edge of the bottom rectangular plate-shaped edge, the boss at the central region consists of a circular boss and a cross-shaped reinforcing rib, the boss on one side of the central portion consists of the circular boss and an 1-shaped reinforcing rib, one side of the trapezoidal three-dimensional shape is provided with a hollow boss, the hollow boss consists of two circular shapes, the hollow boss and the trapezoidal three-dimensional shape form the cavity through which the refrigerator water intake pipe and the refrigerator water outtake pipe are connected to the water inlet (2-1) and the water outlet (2-2) of the connector (3) of the filtration system.

5. The filtration system according to claim 1, **characterized in that** the bottom of the upper cover of the casing has a trapezoidal three-dimensional concave structure, the concave structure is the cavity of the upper cover of the casing, the cavity is configured to accommodate the upper portions of the filter and the connector, two blind holes are provided in the cavity, the central region and one side thereof, the two blind holes are connected to the connector bracket via a screw, the backs of the two blind holes are a cross-shaped protrusion and a 1-shaped protrusion, respectively; the side of the cavity of the upper cover of the casing is provided with two trapezoidal three-dimensional bosses, and the two bosses are located on the longer concave boundary; the two bosses are configured to the snap-fitting with a C-shaped protrusion of the lower cover of the casing for tightly clamping the lower cover of the casing.

6. The filtration system according to claim 1, **characterized in that** the lower cover of the casing has a trapezoidal three-dimensional concave thin plate structure, and the structure consists of four faces, which are a long face A, a long face B, a ground surface and a short face, one end of the trapezoidal three-dimensional concave thin plate structure is opened, one end of the long face A and the long face B which is opened is provided with two bosses, and the two bosses have the two blind holes, respectively; the lower cover of the casing is the long face A, the portion of the long face B close to the short surface has two C-shaped buckles for connecting and tightly clamping two trapezoidal cubes of the upper cover of the casing to prevent the lower cover of the casing from falling off due to the own weight thereof; the lower cover of the casing has a shaft hole for connecting the shaft of an inner casing of the refrigerator, the lower cover of the casing can be rotated clockwise and counterclockwise along the axis so that the lower cover of the casing is opened and closed; the filter element water intake sealing ring groove (2-3) is located under the water inlet (2-1) for installing the filter element water intake sealing ring (9) and cooperating with the inner cavity of the connector core (12) to seal the pre-filtration water; the filter element water outtake sealing groove (2-4) is located on the circumference of a filter element body boss for installing the filter element water outtake sealing ring (10) and cooperating with the top of the inner cavity of the connector core (12) to seal the post-filtration water.

7. The filtration system according to claim 1, **characterized in that** an end cover welding stop port is provided at an opening of the filter element end cover, and an inner rib position is provided at the inner side thereof, a wrench is mounted at an anti-slip thread and the rear side of the filter element end cover, the filter element end cover is provided thereon with the anti-slip thread; the end cover welding stop port is located at an opening end of the end cover, cooperates with a body welding stop port and is dissolved with the body welding stop, and the axes of the end cover welding stop port and the body welding stop port are the same the end cover inner rib positions are evenly distributed inside the filter element end cover for supporting the carbon rod bottom rib position, and the carbon rod bottom rib position and an end cover rib position are embedded with each other.

8. The filtration system according to claim 1, **characterized in that** the connecting flange (2-5) is located on the circumference of the boss at the top of the filter element body, the lower end surface of the connecting flange (2-5) cooperates with the end face of the connector bottom cover (13) for preventing the filtration system from coming out when the filtration system is under pressure.

## Patentansprüche

1. Filtersystem mit einem Gehäuse (1), einem Filterelement (2) und einem Verbindungsstück (3), wobei das Filterelement (2) einen Filterelementkörper und einen Kohlestab (5) umfasst, der innerhalb des Filterelementkörpers angebracht ist, wobei der Filterelementkörper und das Verbindungsstück (3) in einem Hohlraum des Gehäuses (1) verbunden und befestigt sind, durch den ein Kühlwassereinlassrohr und ein Kühlwasserauslassrohr mit dem Wassereinlass und dem Wasserauslass des Verbindungsstücks (3) verbunden werden können, wobei das Filtersystem **dadurch gekennzeichnet ist, dass** der Verbinder (3) eine Verbinderhalterung (14), die in dem Hohlraum des Gehäuses (1) befestigt ist, einen Verbinderkörper (11) mit einer Seite, die mit einem Wassereinlasshohlraum und einem Wasserauslasshohlraum versehen ist, und einen rotierenden Verbinderkern (12) umfasst, der mit dem Verbinderkörper (11) verbunden ist und in einem inneren Hohlraum des Verbinderkörpers (11) angeordnet ist;
wobei die Verbinderhalterung (14) mit einer C-förmigen Nut versehen ist, der Verbinderkörper (11) an der Oberseite der Verbinderhalterung (14) angebracht ist, eine Drehwelle an dem Verbinderkörper (11) angebracht ist, die Drehwelle in der C-förmigen Nut angebracht ist, die Drehwelle an den beiden Seiten des Verbinderkörpers (11) angeordnet ist, wobei die Achse senkrecht zur Achse des Verbinderkörpers (11) ist, die drehende Welle mit der C-förmigen Nut der Verbinderhalterung (14) zusammenwirkt, die Achse der drehenden Welle des Verbinderkörpers (11) koaxial mit der C-förmigen Nut ist, entlang der Achse gedreht werden kann und den Verbinder (3) und das Filterelement antreiben kann, um integral entlang einer Bogenlinie zu schwingen;
wobei der Verbinderkern (12) in dem Verbinderkörper (11) durch einen Wassereinlass-Dichtungsring (15) und einen Wasserauslass-Dichtungsring (16) abgedichtet ist, die jeweils in zwei Nuten des Verbinderkerns (12) angebracht sind;
wobei das Filterelement (2) einen Wassereinlass (2-1) und eine entsprechende Nut (2-3) umfasst, auf der ein Filterelement-Wassereinlass-Dichtungsring (9) montiert ist, der mit einem inneren Hohlraum des Verbinderkerns (12) zusammenpasst, um das Vorfiltrationswasser abzudichten, sowie einen Wasserauslass (2-2) und eine entsprechende Nut (2-4), auf der ein Filterelement-Wasserauslass-Dichtungsring (10) montiert ist, der mit einem inneren Hohlraum des Verbinderkerns (12) zusammenpasst, um das Nachfiltrationswasser abzudichten;
wobei der Verbinder (3) ferner eine Wassereinlasskausche (21), eine Wassereinlasskausche-Hülse (17), eine Wassereinlasskausche-Feder (23) und einen Wassereinlasskausche-Dichtungsring (19) umfasst, die in einem Wassereinlasskausche-Hohlraum angebracht sind, der in dem Wassereinlasshohlraum des Verbinderkörpers (11) angeordnet ist, sowie eine Wasserauslasskausche (22), eine Wasserauslasskausche-Hülse (18), eine Wasserauslasskausche-Feder (24), und einen Wasserauslasskauschen-Dichtungsring (20), die in einem Wasserauslasskauschen-Hohlraum, der in dem Wasserauslass-Hohlraum des Verbinderkörpers (11) angeordnet ist, derart angebracht sind, dass der Verbinderkern (12), der Wassereinlasskauschen (21) und der Wasserauslasskauschen (22) durch die Wassereinlasskauschen-Feder (23) bzw. die Wasserauslasskauschen-Feder (24) fest gepresst werden;
wobeider Verbindungskern (12) mit einem Wassereinlassvorsprung (3-21) versehen ist, an dem eine bogenförmige Nut vorgesehen ist, und einem Wasserauslassvorsprung (3-22), an dem eine bogenförmige Nut vorgesehen ist;
- wenn das Filterelement (2) in den Verbinder (3) eingeführtund gedreht wird, treibt dies die Drehung des Verbinderkerns (12) innerhalb des Verbinderkörpers (11) an, so dass die Wassereinlasskausche (21) und die Wasserauslasskausche (22) durch die Drehung des Verbinderkerns (12) nach oben gedrückt werden, während die Wassereinlasskausche(21) und Wasserauslasskausche(22) von der Feder (23) für den Wassereinlass und der Feder (24) für den Wasserauslass gedrückt werden, wobei die Wassereinlasskausche(21) und Wasserauslasskausche(22)aus der Position der Rille in die Position des Vorsprungs angehoben und angehoben werden, so dass der Wasserdurchgang geöffnet wird, und wenn das Filterelement (2) gedreht wird, um es zu demontieren, die Wassereinlasskausche (21) und die Wasserauslasskausche (22) abgesenkt werden und von der Position des Vorsprungs in die Position der Rille fallen, was einer Situation entspricht, in der, aufgrund der Wirkung der Feder (23) der Wassereinlasskelle und der Feder (24) der Wasserauslasskelle der Dichtungsring (19) der Wassereinlasskelle und der Dichtungsring (20) der Wasserauslasskelle an der Hülse (17) der Wassereinlasskelle und der Hülse (18) der Wasserauslasskelle befestigt sind, wodurch die Abdichtung realisiert wird, so dass der Wasserdurchgang geschlossen ist und das Austreten von Wasser aus dem Anschlussstück (3) aufgrund der Entfernung des Filterelements (2) verhindert wird.

2. Filtersystem nach Anspruch 1, **dadurch gekennzeichnet, dass** die Vorderseite des Filterelementkörpers (2) mit dem Wasserauslass (2-2) versehen ist, wobei der Wassereinlass (2-1) am Umfang des Wasserauslasses (2-2) vorgesehen ist, wobei der Filterelement-Wasserauslass-Dichtungsring (10) am Wasserauslass angebracht ist, der Filterelement-Einlass-Dichtungsring (9) am Wassereinlass angebracht ist; wobei der Wassereinlass ein Satz von lochförmigen Löchern ist, die in einer Ringform auf der zweiten Plattform an der Oberseite des Filterelementkörpers angeordnet sind, die sich unterhalb des Wasserauslasses befindet und auf einer Wassereinlass-Dichtungsringnut (2-3) des Filterelements angeordnet ist, wobei der Wassereinlass für den Eintritt des Vorfiltrationswassers in das Filterelement konfiguriert ist;
wobei das Filterelement (2) ferner eine Kohlestange (5), eine Kohlestangenabdeckung (6), einen Kohlestangenboden (7) und einen Kohlestangenabdeckungsdichtring (8) umfasst, wobei die Kohlestange (5) an der Innenseite des Filterelements (2) tonnenförmig angebracht ist, der Kohlestabboden (7) an der Rückseite des Kohlestabs (5) angebracht ist, die Kohlestababdeckung (6) an der Oberseite des Kohlestabs (5) angebracht ist, der Kohlestababdeckungsdichtring (8) an der Kohlestababdeckung (6) befestigt ist, der Kohlestabboden (7) innerhalb des Filterelements (2) angeordnet ist;
wobei der Wasserauslass (2-1) auf dem Vorsprung an der Oberseite des Filterelementkörpersangeordnet ist, so dass das Nachfiltrationswasser aus dem Filterelement in den Anschluss (3) fließt, und der durch den Wasserauslass des Filterelements gebildete Hohlraum arbeitet mit der Kohlestababdeckung (6) und einer Dichtung zusammen, um eine Dichtungsstruktur zu bilden, der durch den Wassereinlass des Filterelements innen gebildete Hohlraum arbeitet mit dem Dichtungsring (8) der Kohlestababdeckung zusammen, um das Vorfiltrationswasser und das Nachfiltrationswasser abzudichten, um den Kurzschluss des Wasserdurchgangs zu verhindern.

3. Filtrationssystem nach Anspruch 1, **dadurch gekennzeichnet, dass** der Verbinder ferner eine Verbinderbodenabdeckung (13) umfasst, wobei dieVerbinderbodenabdeckung (13) sich an einem unteren Abschnitt des Verbinderkörpers (11) befindet, wobei die Verbinderbodenabdeckung (13) mit einem Nutflansch versehen ist, der an einem Verbindungsflansch des Verbinderkörpers (11) angebracht ist, wobei die Verbinderbodenabdeckung (13) zwei Kerben aufweist, die an einem Körperflanschpositionierungsblock angebracht sind, ein Nutflansch der unteren Abdeckung des Verbinders zwei Knicknuten aufweist und einrastet, um zu verhindern, dass der Verbinder (3) und der Filter (2) aufgrund der Schwerkraft herunterfallen, ein Dichtungsring (15) für den Wassereinlass des Verbinders und ein Dichtungsring (16) für den Wasserauslass des Verbinders in den beiden Nuten des Verbinderkerns (12) angebracht sind, wobei der Dichtungsring (15) für den Wassereinlass des Verbinders in der unteren Nut und der Dichtungsring für den Wasserauslass in der oberen Nut angeordnet ist.

4. Filtersystem nach Anspruch 1, **dadurch gekennzeichnet, dass** der äußere Teil der oberen Abdeckung des Gehäuses eine trapezförmige dreidimensionale Form hat und der Boden davon eine rechteckige plattenartige Kante hat, der obere Teil der trapezförmigen dreidimensionalen Form seitlich und in Längsrichtung verteilte Verstärkungsrippen hat, die obere Ebene davon der entgegengesetzten Richtung der Bodenoberfläche zugewandt ist, die äußere Abdeckung des Gehäuses mit zwei Vorsprüngen versehen ist, wobei ein Vorsprung in dem zentralen Bereich ist und der andere an einer Seite des zentralen Bereichs ist, und die Zentren der zwei Vorsprünge auf einer Achse sind, wobei die beiden Achsen parallel zur Kante der unteren rechteckigen plattenförmigen Kante sind, wobei der Vorsprung im zentralen Bereich aus einem kreisförmigen Vorsprung und einer kreuzförmigen Verstärkungsrippe besteht, wobei der Vorsprung auf einer Seite des zentralen Bereichs aus dem kreisförmigen Vorsprung und einer 1-förmigen Verstärkungsrippe besteht, wobei eine Seite der trapezförmigen dreidimensionalen Form mit einem hohlen Vorsprung versehen ist, wobei der hohle Vorsprung aus zwei kreisförmigen Formen besteht, der hohle Vorsprung und die trapezförmige dreidimensionale Form den Hohlraum bilden, durch den das Wassereinlassrohr des Kühlschranks und das Wasserauslassrohr des Kühlschranks mit dem Wassereinlass (2-1) und dem Wasserauslass (2-2) des Verbinders (3) des Filtersystems verbunden sind.

5. Filtersystem nach Anspruch 1, **dadurch gekennzeichnet, dass** der Boden des oberen Gehäusedeckels eine trapezförmige dreidimensionale konkave Struktur aufweist, die konkave Struktur der Hohlraum des oberen Gehäusedeckels ist, der Hohlraum so konfiguriert ist, dass er die oberen Teile des Filters und des Verbinders aufnimmt, zwei Sacklöcher in dem Hohlraum, dem zentralen Bereich und einer Seite davon vorgesehen sind, die zwei Sacklöcher mit dem Verbinderhalter über eine Schraube verbunden sind, die Rückseiten der zwei Sacklöcher ein kreuzförmiger Vorsprung bzw. ein 1-förmiger Vorsprung sind; wobei die Seite des Hohlraums des oberen Gehäusedeckels mit zwei trapezförmigen dreidimensionalen Vorsprüngen versehen ist, wobei die beiden Vorsprünge sich an der längeren konkaven Grenze befinden; die beiden Vorsprünge sind so konfiguriert, dass sie mit einem C-förmigen Vorsprung des unteren Gehäusedeckels einrasten, um den unteren Gehäusedeckel fest zu klemmen.

6. Filtersystem nach Anspruch 1, **dadurch gekennzeichnet, dass** die untere Abdeckung des Gehäuses eine trapezförmige dreidimensionale konkave dünne Plattenstruktur aufweist und die Struktur aus vier Flächen besteht, die eine lange Fläche A, eine lange Fläche B, eine geschliffene Oberfläche und eine kurze Fläche sind, ein Ende der trapezförmigen dreidimensionalen konkaven dünnen Plattenstruktur geöffnet ist, ein Ende der langen Fläche A und der langen Fläche B, die geöffnet ist, mit zwei Vorsprüngen versehen ist und die beiden Vorsprünge jeweils die beiden Sacklöcher aufweisen; die untere Abdeckung des Gehäuses ist die lange Fläche A, der Abschnitt der langen Fläche B nahe der kurzen Oberfläche hat zwei C-förmige Schnallen zum Verbinden und festen Festklemmen von zwei trapezförmigen Würfeln der oberen Abdeckung des Gehäuses, um zu verhindern, dass die untere Abdeckung des Gehäuses aufgrund ihres eigenen Gewichts herunterfällt; wobei die untere Abdeckung des Gehäuses ein Wellenloch zum Verbinden der Welle eines inneren Gehäuses des Kühlschranks aufweist, wobei die untere Abdeckung des Gehäuses im Uhrzeigersinn und gegen den Uhrzeigersinn entlang der Achse gedreht werden kann, so dass die untere Abdeckung des Gehäuses geöffnet und geschlossen wird; wobei die Filterelement-Wassereinlass-Dichtungsringnut (2-3) sich unter dem Wassereinlass (2-1) befindet, um den Filterelement-Wassereinlass-Dichtungsring (9) zu installieren und mit dem inneren Hohlraum des Verbindungskerns (12) zusammenzuwirken, um das Vorfilterungswasser abzudichten; wobei die Dichtungsnut (2-4) für den Wasserauslass des Filterelements sich am Umfang eines Nabens des Filterelementkörpers befindet, um den Dichtungsring (10) für den Wasserauslass des Filterelements zu installieren und mit der Oberseite des inneren Hohlraums des Verbindungskerns (12) zusammenzuwirken, um das Wasser nach der Filtration abzudichten.

7. Filtrationssystem nach Anspruch 1, **dadurch gekennzeichnet, dass** eine Enddeckel-Schweißstoppöffnung an einer Öffnung des Filterelement-Enddeckels vorgesehen ist, und eine innere Rippenposition an der Innenseite davon vorgesehen ist, ein Schraubenschlüssel an einem Anti-Rutsch-Gewinde und der Rückseite des Filterelement-Enddeckels montiert ist, der Filterelement-Enddeckel darauf mit dem Anti-Rutsch-Gewinde versehen ist; wobei die Endabdeckungs-Schweißanschlagöffnung sich an einem Öffnungsende der Endabdeckung befindet, mit einer Körper-Schweißanschlagöffnung zusammen arbeitet und mit dem Körper-Schweißanschlag aufgelöst wird, wobei die Achsen der Endabdeckungs-Schweißanschlagöffnung und der Körper-Schweißanschlagöffnung die gleichen sind, wobei die Endabdeckungs-Innenrippenpositionen gleichmäßig innerhalb der Filterelement-Endabdeckung verteilt sind, um die Kohlenstoffstab-Bodenrippenposition zu unterstützen, und die Kohlenstoffstab-Bodenrippenposition und eine Endabdeckungsrippenposition sind ineinander eingebettet.

8. Filtersystem nach Anspruch 1, **dadurch gekennzeichnet, dass** der Verbindungsflansch (2-5) am Umfang des Vorsprungs an der Oberseite des Filterelementkörpers angeordnet ist, wobei die untere Endfläche des Verbindungsflansches (2-5) mit der Endfläche der unteren Abdeckung (13) des Verbinders zusammenwirkt, um zu verhindern, dass das Filtersystem herauskommt, wenn das Filtersystem unter Druck steht.

## Revendications

1. Système de filtration comprenant un boîtier (1), un élément filtrant (2) et un connecteur (3), dans lequel :
- ledit élément filtrant (2) comprend un corps d'élément filtrant et une tige de carbone (5) montée à l'intérieur du corps d'élément filtrant, le corps d'élément filtrant et le connecteur (3) sont connectés et fixés dans une cavité du boîtier (1) à travers laquelle un tuyau d'entrée d'eau de réfrigérateur et un tuyau de sortie d'eau de réfrigérateur peuvent être branchés sur l'entrée et à la sortie d'eau du connecteur (3), le système de filtration, **caractérisé en ce que**:
- ledit connecteur (3) comprend un support de connecteur (14) qui est fixé dans la cavité du boîtier (1), un corps de connecteur (11) ayant un côté muni d'une cavité d'entrée d'eau et d'une cavité de sortie d'eau, et un noyau de connecteur rotatif (12) qui est connecté au corps de connecteur (11) et situé dans une cavité intérieure du corps de connecteur (11) ;
le support de connecteur (14) est prévu d'une rainure en forme de C, le corps de connecteur (11) est monté sur le côté supérieur du support de connecteur (14), un arbre rotatif est monté sur le corps de connecteur (11), l'arbre rotatif est monté dans la rainure en forme de C, l'arbre rotatif est situé aux deux côtés du corps de connecteur (11), son axe est perpendiculaire à l'axe du corps de connecteur (11), l'arbre rotatif coopère avec la rainure en forme de C du support de connecteur (14), l'axe de l'arbre rotatif du corps de connecteur (11) est coaxial avec la rainure en forme de C, peut être tourné le long de l'axe, et peut entraîner le connecteur (3) et l'élément filtrant à osciller intégralement le long d'une ligne d'arc ;
le noyau de connecteur (12) est scellé dans le corps de connecteur (11) par une bague d'étanchéité d'entrée d'eau (15) et une bague d'étanchéité de sortie d'eau (16) qui sont montées respectivement dans les deux rainures du noyau de connecteur (12) ;
l'élément filtrant (2) comprend une entrée d'eau (2-1) et une rainure correspondante (2-3) sur laquelle est montée une bague d'étanchéité d'entrée d'eau d'élément filtrant (9), qui s'adapte à une cavité interne du noyau de connecteur (12) pour sceller l'eau de pré-filtration, ainsi qu'une sortie d'eau (2-2) et une rainure correspondante (2-4) sur laquelle est montée une bague d'étanchéité de sortie d'eau d'élément filtrant (10), qui s'adapte à une cavité interne du noyau de connecteur (12) pour sceller l'eau de post-filtration ;
- ledit connecteur (3) comprend en outre une cosse d'entrée d'eau (21), un manchon de cosse d'entrée d'eau (17), un ressort de cosse d'entrée d'eau (23), et une bague d'étanchéité de cosse d'entrée d'eau (19), qui sont montés dans une cavité de cosse d'entrée d'eau, qui est agencée dans la cavité d'entrée d'eau du corps de connecteur (11), ainsi qu'une cosse d'évacuation d'eau (22), un manchon de cosse d'évacuation d'eau (18), un ressort de cosse de sortie d'eau (24), et une bague d'étanchéité de cosse de sortie d'eau (20), qui sont montées dans une cavité de cosee de sortie d'eau, qui est agencée dans la cavité de sortie d'eau du corps de connecteur (11),le noyau de connecteur (12), la cosse d'entrée d'eau (21) et le manchon de cosse de sortie d'eau (22) sont étroitement pressés par le ressort de cosse d'entrée d'eau (23) et le ressort de cosse de sortie d'eau (24) respectivement ;
- le noyau de connexion (12) est pourvu d'un bossage d'entrée d'eau (3-21) sur lequel est prévue une rainure en forme d'arc, et d'un bossage de sortie d'eau (3-22) sur lequel est prévue une rainure en forme d'arc ;
- lorsque l'élément filtrant (2) est inséré dans le connecteur (3) et mis en rotation, cela entraîne la rotation du noyau de connecteur (12) à l'intérieur du corps de connecteur (11), de telle sorte que la cosse d'entrée d'eau (21) et la cosse de sortie d'eau (22) sont poussées vers le haut par la rotation du noyau de connecteur (12), tout en étant pressés par le ressort de la cosse d'entrée d'eau (23) et le ressort de la cosse de sortie d'eau (24) respectivement, et ils sont soulevés et élevés de la position de la rainure à la position du bossage de sorte que le passage d'eau est ouvert, et lorsque l'élément filtrant (2) est tourné de manière à être démonté, la cosse d'entrée d'eau (21) et la cosse de sortie d'eau (22) sont abaissées et tombent de la position du bossage à la position de la rainure, correspondant à une situation où, grâce à l'action du ressort de la cosse d'entrée d'eau (23) et du ressort de la cosse de sortie d'eau (24), la bague d'étanchéité de la cosse d'entrée d'eau (19) et la bague d'étanchéité de la cosse de sortie d'eau (20) sont fixées au manchon de la cosse d'entrée d'eau (17) et au manchon de la cosse de sortie d'eau (18), réalisant l'étanchéité, de sorte que le passage d'eau est fermé, empêchant la fuite d'eau du connecteur (3) due au retrait de l'élément filtrant (2).

2. Système de filtration selon la revendication 1, **caractérisé en ce que**, le côté avant du corps d'élément filtrant (2) est pourvu de la sortie d'eau (2-2), l'entrée d'eau (2-1) est prévue à la circonférence de la sortie d'eau (2-2), la bague d'étanchéité de sortie d'eau d'élément filtrant (10) est monté à la sortie d'eau, la bague d'étanchéité d'entrée d'élément filtrant (9) est monté à l'entrée d'eau ; l'entrée d'eau est un ensemble de trous en forme d'orifices, qui sont agencés en forme d'anneau sur la seconde plate-forme au sommet du corps de l'élément filtrant, situé sous la sortie d'eau, et situé sur la rainure de bague d'étanchéité d'entrée d'eau de l'élément filtrant (2-3), l'entrée d'eau est configurée pour l'entrée de l'eau de pré-filtration dans l'élément filtrant ; l'élément filtrant (2) comprend en outre une tige de carbone (5), un couvercle de tige de carbone (6), un fond de tige de carbone (7), et une bague d'étanchéité de couvercle de tige de carbone (8), dans lequel la tige de carbone (5) est montée dans le côté intérieur de l'élément filtrant (2) en forme de baril, le fond de la tige de carbone (7) est monté sur le côté arrière de la tige de carbone (5), le couvercle de la tige de carbone (6) est monté au sommet de la tige de carbone (5), la bague d'étanchéité du couvercle de la tige de carbone (8) est fixée au couvercle de la tige de carbone (6), le fond de la tige de carbone (7) est situé à l'intérieur de l'élément filtrant (2) ;
la sortie d'eau (2-1) est située sur le bossage au sommet du corps de l'élément filtrant de sorte que l'eau de post-filtration s'écoule hors de l'élément filtrant dans le connecteur (3), et la cavité formée par la sortie d'eau de l'élément filtrant coopère avec le couvercle de la tige de carbone (6) et un scellant pour former une structure d'étanchéité, la cavité formée à l'intérieur par l'entrée d'eau de l'élément filtrant coopère avec la bague d'étanchéité du couvercle de la tige de carbone (8) pour sceller l'eau de pré-filtration et de post-filtration, afin d'éviter le court-circuit du passage de l'eau.

3. Système de filtration selon la revendication 1, **caractérisé en ce que**, le connecteur comprend en outre un couvercle de fond de connecteur (13), le fond de connecteur (13) est au niveau d'une partie inférieure du corps de connecteur (11), le couvercle de fond de connecteur (13) est muni d'une bride de rainure, la bride de rainure est fixée à une bride de connexion du corps de connecteur (11), le couvercle de fond de connecteur (13) a deux encoches fixées à un bloc de positionnement de bride de corps, une bride de rainure du couvercle inférieur du connecteur comporte deux rainures à boucle et est encliquetée pour empêcher le connecteur (3) et le filtre (2) de tomber en raison de la gravité, une bague d'étanchéité d'entrée d'eau du connecteur (15) et une bague d'étanchéité de sortie d'eau du connecteur (16) sont montées dans les deux rainures du noyau du connecteur (12), respectivement, la bague d'étanchéité d'entrée d'eau du connecteur (15) étant située dans la rainure inférieure, et la bague d'étanchéité de sortie d'eau étant située dans la rainure supérieure.

4. Système de filtration selon la revendication 1, **caractérisé en ce que**, la partie extérieure du couvercle supérieur du botier a une forme tridimensionnelle trapézodale, et le fond de celui-ci a un bord rectangulaire en forme de plaque, la partie supérieure de la forme tridimensionnelle trapézodale a des nervures de renforcement réparties latéralement et longitudinalement, le plan supérieur de celle-ci fait face à la direction opposée de la surface du sol, le couvercle extérieur du botier est muni de deux bossages, un bossage est dans la région centrale, et l'autre est sur un côté de la région centrale, et les centres des deux bossages sont sur un axe, et les deux axes sont parallèles au bord du bord inférieur en forme de plaque rectangulaire, le bossage dans la région centrale consiste en un bossage circulaire et une nervure de renforcement en forme de croix, le bossage sur un côté de la partie centrale consiste en le bossage circulaire et une nervure de renforcement en forme de 1, un côté de la forme tridimensionnelle trapézoïdale est pourvu d'un bossage creux, le bossage creux est constitué de deux formes circulaires, le bossage creux et la forme tridimensionnelle trapézoïdale forment la cavité à travers laquelle le tuyau d'entrée d'eau du réfrigérateur et le tuyau de sortie d'eau du réfrigérateur sont branchés à l'entrée d'eau (2-1) et à la sortie d'eau (2-2) du connecteur (3) du système de filtration.

5. Système de filtration selon la revendication 1, **caractérisé en ce que**, le fond du couvercle supérieur du botier a une structure concave tridimensionnelle trapézodale, la structure concave est la cavité du couvercle supérieur du botier, la cavité est configurée pour recevoir les parties supérieures du filtre et du connecteur, deux trous borgnes sont prévus dans la cavité, la région centrale et un côté de celle-ci, les deux trous borgnes sont connectés au support du connecteur via une vis, les dos des deux trous borgnes sont une saillie en forme de croix et une saillie en forme de 1, respectivement ; le côté de la cavité du couvercle supérieur du boîtier est pourvu de deux bossages tridimensionnels trapézoïdaux, et les deux bossages sont situés sur la limite concave la plus longue ; les deux bossages sont configurés pour s'emboîter avec une saillie en forme de C du couvercle inférieur du boîtier pour serrer fermement le couvercle inférieur du boîtier.

6. Système de filtration selon la revendication 1, **caractérisé en ce que**, le couvercle inférieur du boîtier a une structure de plaque mince concave tridimensionnelle trapézoïdale, et la structure consiste en quatre faces, qui sont une face longue A, une face longue B, une surface de fond et une face courte, une extrémité de la structure de plaque mince concave tridimensionnelle trapézoïdale est ouverte, une extrémité de la face longue A et de la face longue B qui est ouverte est munie de deux bossages, et les deux bossages ont les deux trous borgnes, respectivement ; le couvercle inférieur du boîtier est la face longue A, la partie de la face longue B proche de la surface courte a deux boucles en forme de C pour connecter et serrer fermement deux cubes trapézoïdaux du couvercle supérieur du boîtier pour empêcher le couvercle inférieur du boîtier de tomber en raison de son propre poids ; le couvercle inférieur du boîtier a un trou d'arbre pour connecter l'arbre d'un boîtier interne du réfrigérateur, le couvercle inférieur du boîtier peut être tourné dans le sens des aiguilles d'une montre et dans le sens inverse des aiguilles d'une montre le long de l'axe de sorte que le couvercle inférieur du boîtier est ouvert et fermé ; la rainure de la bague d'étanchéité de l'entrée d'eau de l'élément filtrant (2-3) est située sous l'entrée d'eau (2-1) pour installer la bague d'étanchéité de l'entrée d'eau de l'élément filtrant (9) et coopérer avec la cavité interne du noyau de connecteur (12) pour sceller l'eau de pré-filtration ; la rainure d'étanchéité de sortie d'eau de l'élément filtrant (2-4) est située sur la circonférence d'un bossage du corps de l'élément filtrant pour installer la bague d'étanchéité de sortie d'eau de l'élément filtrant (10) et coopérer avec le haut de la cavité interne du noyau de connecteur (12) pour sceller l'eau de post-filtration.

7. Système de filtration selon la revendication 1, **caractérisé en ce que**, un orifice d'arrêt de soudage de couvercle d'extrémité est prévu au niveau d'une ouverture du couvercle d'extrémité d'élément filtrant, et une position de nervure intérieure est prévue au niveau du côté intérieur de celui-ci, une clé est montée au niveau d'un filetage antidérapant et du côté arrière du couvercle d'extrémité d'élément filtrant, le couvercle d'extrémité d'élément filtrant est pourvu sur celui-ci du filetage antidérapant ; l'orifice d'arrêt de soudage du couvercle d'extrémité est situé à une extrémité d'ouverture du couvercle d'extrémité, coopère avec un orifice d'arrêt de soudage du corps et est dissous avec l'arrêt de soudage du corps, et l'axes de l'orifice d'arrêt de soudage du couvercle d'extrémité et de l'orifice d'arrêt de soudage du corps sont identiques, les positions des nervures intérieures du couvercle d'extrémité sont uniformément réparties à l'intérieur du couvercle d'extrémité de l'élément filtrant pour supporter la position de la nervure inférieure de la tige de carbone, et la position de la nervure inférieure de la tige de carbone et la position de la nervure du couvercle d'extrémité sont imbriquées l'une dans l'autre.

8. Système de filtration selon la revendication 1, **caractérisé en ce que**, la bride de connexion (2-5) est située sur la circonférence du bossage au sommet du corps de l'élément filtrant, la surface d'extrémité inférieure de la bride de connexion (2-5) coopère avec la face d'extrémité du couvercle inférieur du connecteur (13) pour empêcher le système de filtration de sortir lorsque le système de filtration est sous pression.
